# EUROPEAN PATENT APPLICATION

(11) **EP 3 715 622 A1**
(43) Date of publication of application: **30.09.2020**
(21) Application number: 18881112.9
(22) Date of filing: 23.11.2018
(51) Int. Cl.: F03B 13/18, F16H 1/06

(54) **CAPSULE BUOY TYPE WAVE ENERGY CONVERTER**

(30) Priority: 24.11.2017 KR 20170158474
(71) Applicant: Logosware Incorporation, Busan 49111 (KR)
(72) Inventor: LEE, Kwang Woo, Incheon 22210 (KR); KIM, Cheol Wan, Seoul 03351 (KR)
(74) Representative: Gulde & Partner
(86) International application number: PCT/KR2018/014490
(87) International publication number: WO 2019/103510

(57) **Abstract**

The present invention can provide a capsule buoy type wave energy converter comprising: a buoy installed on the water surface; and a power generating unit received in the buoy in a sealed manner so as to generate power, wherein the power generating unit comprises: a generator for generating power; at least one wave actuator for converting bidirectional movement caused by wave power into unidirectional movement; a torque generator for generating torque by the unidirectional movement transmitted from the wave actuator; and an accelerator for accelerating the torque from the torque generator so as to operate the generator.

## Description

### Technical Field

The present invention relates to a capsule buoy type wave energy converter.

### Background Art

Wave energy conversion or wave-power generation is generation of power from wave energy, and corresponds to one field of new and renewable energy fields.

Wave energy conversion may generally be categorized into floating wave energy conversion, oscillating water column (OWVC) wave energy conversion, and overtopping wave energy conversion.

Among the above, the floating wave energy conversion uses a device designed to react in response to the movement of the water surface so that wave energy is directly transferred to the device. For example, the movement of a pendulum disposed within the buoy may be converted into rotational movement to operate a generator via gears. This method may produce electric power of about 10W from a wave height of 40 cm.

However, in the floating wave energy conversion, wave energy directly acts to the device, thereby causing the structural instability vulnerable, which is problematic.

In addition, the OWVC wave energy conversion converts a change in a changer space caused by a wave feeding a water column into a flow of inside air in a guide pipe. The flow of air produced in this manner rotates a turbine disposed within the guide pipe, thereby generating electricity.

In addition, the overtopping wave energy conversion is provided with a ramp facing toward waves, and a wave overtopping the ramp is captured in a reservoir. Water in the reservoir rotates a water turbine to generate electricity. In particular, a secondary converter in the reservoir is not exposed to a load caused by the movement of waves, and thus, is advantageously less vulnerable to wave impacts.

However, both the OWVC wave energy conversion and the overtopping wave energy conversion may damage the surrounding environment when constructed, since the construction of a large structure is essentially necessary. In addition, the operation of such equipment may be disadvantageously influenced by the surrounding environment, such as changes in the tide.

### Disclosure

### Technical Problem

Accordingly, the present invention has been made keeping in mind the above problems occurring in the prior art, and an objective of the present invention is to provide a capsule buoy type wave energy converter able to maximize energy efficiency by directly using the energy of billows or waves.

In addition, another objective of the present invention is to provide a capsule buoy type wave energy converter able to provide a design by which a generator may be completely isolated from sea water, thereby obtaining mechanical reliability.

In addition, another objective of the present invention is to provide a capsule buoy type wave energy converter having a simple structure able to facilitate at least one of construction, addition, and size-reduced construction.

### Technical Solution

In order to accomplish the above objective, the present invention may provide following embodiments.

An embodiment of the present invention may provide a capsule buoy type wave energy converter including: a buoy disposed on the water surface; and a power generating unit accommodated in the buoy in a sealed manner to generate electricity. The power generating unit may include: a generator generating electricity; at least one wave actuator converting a bidirectional movement caused by wave power into a unidirectional movement; a torque generator generating rotational force from the unidirectional movement transferred from the wave actuator; and an accelerator accelerating the rotational force of torque generator to actuate the generator.

### Advantageous Effects

Accordingly, the present invention may maximize energy efficiency by directly using the energy of billows or waves.

In addition, the present invention may provide a design by which a generator may be completely isolated from sea water, thereby obtaining mechanical reliability.

In addition, the present invention may have a modularized capsule buoy type structure able to facilitate construction and movement, prevent the surrounding environment from being damaged, and facilitate expansion.

### Description of Drawings

FIG. 1 is a perspective view schematically illustrating a capsule buoy type wave energy converter according to the present invention;
FIG. 2 is a block diagram illustrating a power generating unit according to the present invention;
FIG. 3 is a cross-sectional view of the buoy;
FIG. 4 is a perspective view illustrating the power generating unit;
FIG. 5 is an exploded perspective view illustrating a wave actuator;
FIG. 6 is a front view illustrating a torque generator;
FIG. 7 is a front view illustrating an accelerator;
FIG. 8 is a rear view of FIG. 7;
FIGS. 9 to 13 are plan views schematically illustrating a variety of embodiments of the wave actuator; and
FIGS. 14 and 15 are views illustrating an application of the present invention.

### Mode for Invention

Hereinafter, reference will be made to embodiments and examples of the present invention in detail, so that those skilled in the art to which the present invention relates could easily put the present invention into practice.

However, it should be noted that the present invention is not be limited to the illustrative embodiments and examples but may be embodied in various other ways. It should not be understood that the terms or words used in the specification and the appended claims are limited to general or dictionary meanings, but interpreted based on the meanings and concepts corresponding to technical aspects of the present invention.

It will be understood that the terms "comprise", "include", and "have" used herein are intended to cover non-exclusive inclusions unless explicitly described to the contrary.

Hereinafter, an exemplary embodiment of a capsule buoy type wave energy converter according to the present invention will be described in detail with reference to the accompanying drawings.

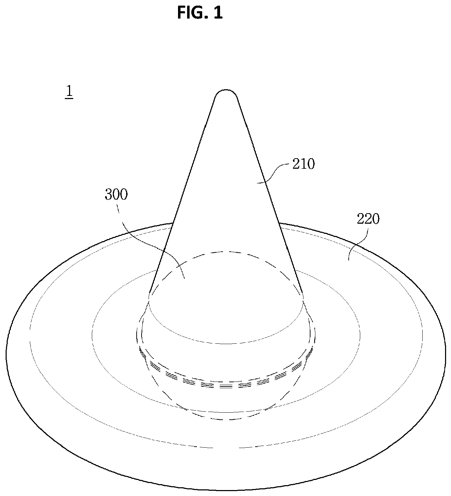

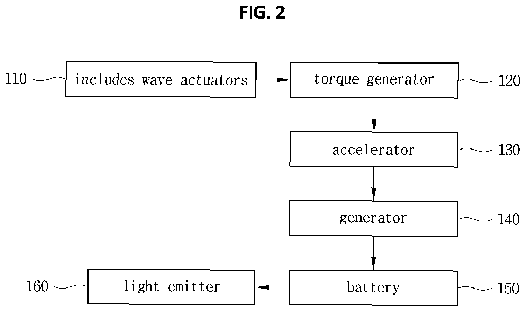

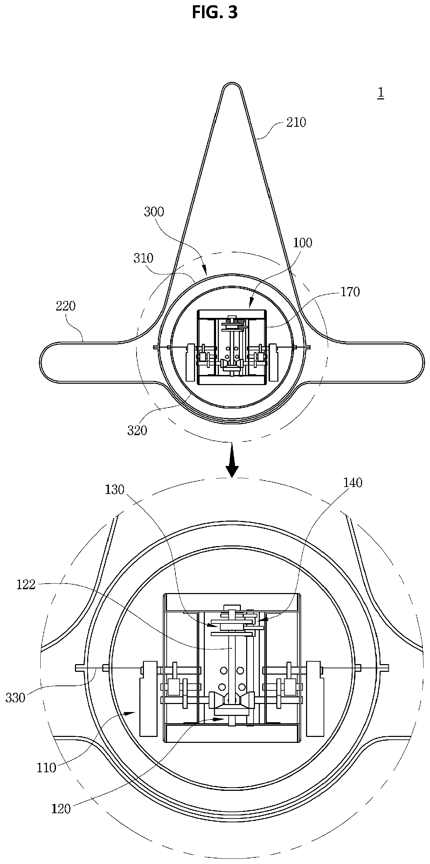

FIG. 1 is a perspective view schematically illustrating a capsule buoy type wave energy converter according to the present invention, FIG. 2 is a block diagram illustrating a power generating unit according to the present invention, and FIG. 3 is a cross-sectional view of the buoy.

Referring to FIG. 1, the present invention includes a buoy 1 floating on or in water while moving on billows or waves (hereinafter, collectively referred to as wave energy), a power generating unit 100 disposed within the buoy 1 to convert wave power of the wave energy into electric energy, and a receptacle unit 300 disposed within the buoy 1 to accommodate the power generating unit 100.

The buoy 1 includes a pointed portion 210 vertically erected in the shape of a cone and an extension 220 extending outward such that a space accommodating the receptacle unit 300 and the power generating unit 100 is defined therein.

Here, the buoy 1 is a buoy 1 well known in the art, and is the same as those of the related art, except that a waterproof sealed space able to accommodate the receptacle unit 300 is provided in the buoy 1.

Referring to FIGS. 2 and 3, the receptacle unit 300 may include a first receptacle ball 310 accommodating the power generating unit 100 and a second receptacle ball 320 accommodating the first receptacle ball 310.

Both the first receptacle ball 310 and the second receptacle ball 320 are fabricated to be waterproof to protect the power generating unit 100 accommodated therein from seawater intrusion and impacts caused by wave energy.

In this regard, an internal support structure may be provided to have a space between the outer surface of the first receptacle ball 310 and the inner space of the second receptacle ball 320. For example, the first receptacle ball 310 and the second receptacle ball 320 may be fixed by fixing pins 330 such that the first receptacle ball 310 and the second receptacle ball 320 have the space therebetween.

In addition, the first receptacle ball 310 has a spherical inner surface, such that a hexahedral housing 170 of the power generating unit 100 may be press-fitted into the first receptacle ball 310. In this regard, the first receptacle ball 310 may be made of an elastic material.

In addition, the first receptacle ball 310 and the second receptacle ball 320 may be separated from each other or be coupled to each other using fixing members, such as fixing pins or screws. A fastening structure in which the first receptacle ball 310 and the second receptacle ball 320 press-fitted to each other may also be used.

In addition, the power generating unit 100 includes wave actuators 110, a torque generator 120, an accelerator 130, a generator 140, a battery 150, a light emitter 160, and the housing 170.

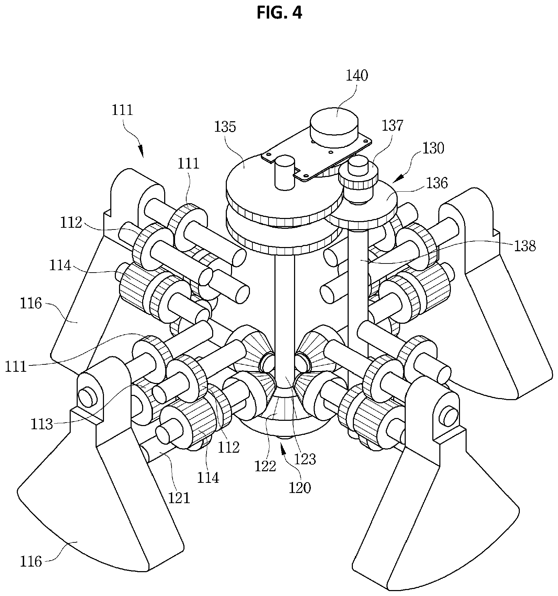

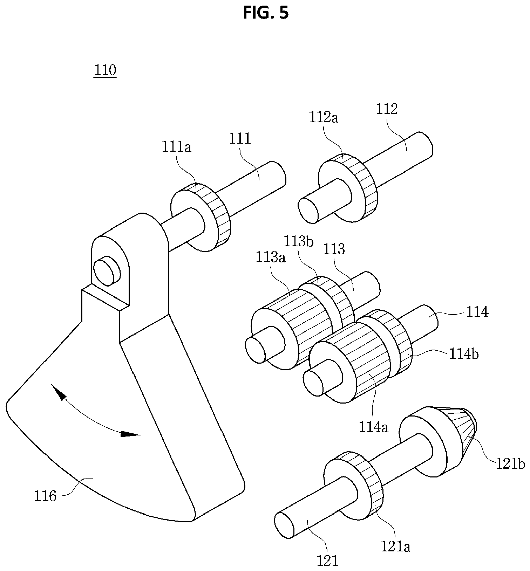

Among the above, the wave actuators 110 convert wave energy into unidirectional rotational energy to drive the torque generator 120. A more detailed description with reference to FIGS. 4 and 5 will be provided later.

The torque generator 120 is driven by the rotational energy of the wave actuators 110 to drive the accelerator 130.

The accelerator 130 accelerates the rotational force of the torque generator 120 in response to the adjustment of the gear ratio to actuate the generator 140.

The rotor 141 of the generator 140 is rotated by the accelerator 130 to generate electric power.

The battery 150 is charged with electric energy generated by the generator 140 and supplies electricity to the light emitter 160. Here, the battery 150 may be connected in series or in parallel to the battery 150 disposed in the power generating unit 100 of another buoy 1. Such a connection between the power generating units 100 may be provided by a cable extending below the water surface.

The light emitter 160 may be selected from among a light-emitting diode (LED) or an LED lamp including a plurality of LEDs. As described above, one or more light emitters 160 may be provided on the tip or an outer surface of the pointed portion 210.

Here, in the present invention, electricity generated by the generator 140 may be directly supplied to the light emitter 160 without the battery 150. That is, since wave energy is generated constantly, the battery 150 may not be provided, and the generator 140 may directly supply electricity to the light emitter 160. That is, in the present invention, the battery 150 may be selectively used depending on the intention of a provider or a designer.

Accordingly, the light emitter 160 may emit light using electricity supplied by the battery 150 or supplied directly by the generator 140. In this regard, a D/D converter or an A/D converter for converting supplied electricity may be provided. Alternatively, in a case in which the battery 150 is added, a battery detector (not shown) able to detect the state of charge of the battery 150 may be further included. A description of such a device for driving the light emitter 160 will be omitted, since a well-known device may be used.

In addition, the power generating unit 100 may further include a communication device (not shown) communicating with the global positioning system (GPS) so as to review the state of charge of the battery 150 or positional information.

In addition, the present invention may further include at least one of a server and a mobile terminal (not shown) able to communicate with the buoy 1, so that the positional information of the power generating unit 100 and the state of charge of the battery 150 may be monitored at a remote place.

For example, an application program may be installed in a mobile terminal such that the mobile terminal may review the positional information of the buoy 1 and the state of charge of the battery 150. Thus, a user may review the positional information of the buoy 1 and the state of charge of the battery 150 at a remote place by executing the application program installed in the mobile terminal.

Hereinafter, specific configurations of the wave actuators 110, the torque generator 120, and the accelerator 130 will be described in more detail.

FIG. 4 is a perspective view illustrating the power generating unit, and FIG. 5 is an exploded perspective view illustrating the wave actuator.

Referring to FIGS. 4 and 5, each of the wave actuators 110 includes a stationary pendulum 116 fixedly disposed outside of the housing 170 and a clutch assembly 111 to 114 connected to the stationary pendulum 116 to convert bidirectional rotational force to unidirectional rotational force.

Described with reference to the illustration of the drawings, the stationary pendulum 116 is fan-shaped and has a mass by which the stationary pendulum 116 may remain vertically erected outside of the housing 170 irrespective of the period of wave energy. For example, since the clutch assembly is rotatably connected to the stationary pendulum 116, the stationary pendulum 116 may remain in the original position due to the mass thereof, even when kinetic energy due to the direction of wave or wind is applied thereto. That is, the stationary pendulum 116 maintains the original position, shape, or posture irrespective of the direction of kinetic energy, thereby generating bidirectional rotational force to the clutch assembly.

The clutch assembly 111 to 114 is rotated bidirectionally by the direction of kinetic energy to convert kinetic energy into unidirectional rotational force. That is, when unidirectional kinetic energy is applied, the clutch assembly is rotated in the opposite direction to transfer unidirectional rotational force to the torque generator 120. When kinetic energy is applied in opposite direction, the clutch assembly transfers unidirectional rotational force to the torque generator 120.

That is, the clutch assembly 111 to 114 transmits unidirectional rotational force to the torque generator 120 in the same manner, irrespective of the direction of kinetic energy caused by billows or waves.

Described in more detail, the clutch assembly includes a first shaft 111 connected to the stationary pendulum 116, a second shaft 112 rotatably engaged with the first shaft 111, and a third shaft 113 and a fourth shaft 114 rotating below the first shaft 111 and the second shaft 112. Here, the first shaft 111 is connected to the second shaft 112 and the third shaft 113, the second shaft 112 is connected to the first shaft 111 and the fourth shaft 114, and the third shaft 113 and the fourth shaft 114 are connected to a first torque gear 121 of the torque generator 120 to be described later.

The first shaft 111 is connected to the stationary pendulum 116 to rotate bidirectionally. Here, the first shaft 111 includes gear teeth 111a engaging with the second shaft 112 adjacent thereto and the third shaft 113 located therebelow.

The second shaft 112 includes gear teeth 112a fixed in a position opposing the first shaft 111 to be pressed in response to bidirectional rotation of the first shaft 111 and transfer force to the fourth shaft 114. Accordingly, when the first shaft 111 rotates in one direction or the opposite direction, the second shaft 112 rotates in the opposite direction or one direction to transfer force to the fourth shaft 114.

The third shaft 113 includes a unidirectional bearing 113a configured to be pressed only when the first shaft 111 rotates in the opposite direction and gear teeth 113b transferring force to the torque generator 120. The unidirectional bearing 113a engages with the gear teeth 111a of the first shaft 111 such that the unidirectional bearing 113a is pressed only when the first shaft 111 rotates in the opposite direction but idles when the first shaft 111 rotates in one direction. In addition, when force is transferred to the unidirectional bearing 113a, the gear teeth 113b of the third shaft 113 rotates to transfer opposite directional force to the torque generator 120.

That is, the third shaft 113 rotates in one direction only when the first shaft 111 rotates in the opposite direction. When the first shaft 111 rotates in one direction, the third shaft 113 does not rotate due to the idling of the unidirectional bearing 113a.

The fourth shaft 114 includes a unidirectional bearing 114a configured to be pressed only when the second shaft 112 rotates in the opposite direction and gear teeth 114b connected to gear teeth 121a of the torque generator 120. Accordingly, the unidirectional bearing 114a of the fourth shaft 114 is pressed by the second shaft gear teeth 112a to rotate in one direction only when the second shaft 112 rotates in the opposite direction, and idles when the second shaft 112 rotates in one direction.

That is, the third shaft 113 and the fourth shaft 114 include the unidirectional bearings 113a and 114a engaging with the gear teeth 111a and 112a of the first shaft 111 and the second shaft 112 to receive bidirectional rotational force from the first shaft 111 and the second shaft 112 rotating bidirectionally and convert the received rotational force into unidirectional force.

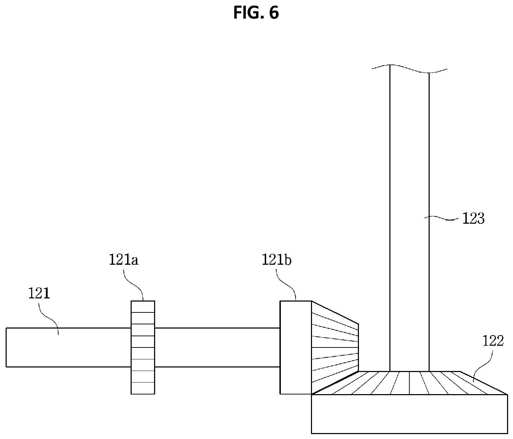

The torque generator 120 will be described with reference to FIG. 6.

FIG. 6 is a front view illustrating the torque generator.

Referring to FIG. 6, the torque generator 120 includes a first torque gear 121, a second torque gear 122, and a torque shaft 123.

The first torque gear 121 includes the first gear teeth 121a engaging with the gear teeth 113b and 114b of the third shaft 113 and the fourth shaft 114 and second gear teeth 121b engaging with gear teeth (assigned with no reference numeral) of the second torque gear 122.

Since the first gear teeth 121a are engaged with the gear teeth 113b of the third shaft 113 and the gear teeth 114b of the fourth shaft 114, the first gear teeth 121a are rotated by force transferred through the fourth shaft 114 when the first shaft 111 rotates in one direction and are rotated by force transferred through the third shaft 113 when the first shaft 111 rotates in the opposite direction. Here, the rotational force transferred through the third shaft 113 and the rotational force transferred through the fourth shaft 114 are in the same direction. Accordingly, the first torque gear 121 rotates in one direction irrespective of the direction of rotation of the stationary pendulum 116.

That is, the first torque gear 121 receives unidirectional rotational force converted by the unidirectional bearings 113a and 114a of the third shaft 113 and the fourth shaft 114.

The second gear teeth 121b are provided on an outer surface of an end portion. The thickness of the end portion increases as the end portion extends in the reverse direction, such that the outer surface of the end portion is inclined. Due to this configuration, the second gear teeth 121b transfer rotational force to the second torque gear 122.

The second torque gear 122 has a recess or a through-hole in the planar central portion thereof, such that the torque shaft 123 is fastened to the recess or a through-hole. The second torque gear 122 has gear teeth (assigned with no referenced numeral) on the surface thereof, such that the gear teeth of the second torque gear 122 engage with the second gear teeth 121b of the second torque gear 121. Accordingly, the second torque gear 122 is rotated by rotational force transferred from the first torque gear 121 to rotate the torque shaft 123.

Here, the surface of the second torque gear 122, on which the gear teeth (assigned with no referenced numeral) are provided, is inclined, and the recess or through-hole extending downward from the top end, such that torque shaft 123 is placed therein.

In addition, although the first torque gear 121 has been described as being a component of the torque generator 120 in the present invention, the present invention is not limited thereto. The first torque gear 121 may be categorized as being a fifth shaft (or first torque gear) of the wave actuator 110. That is, the wave actuator 110 may include the above-described first torque gear 121.

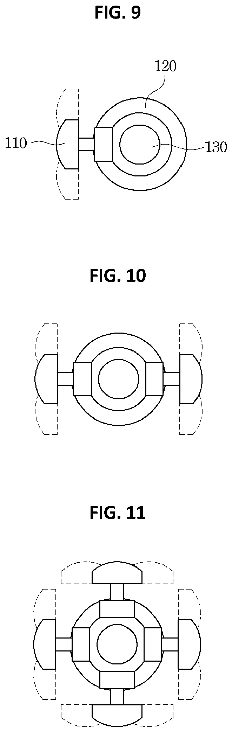

As described above, the plurality of wave actuators 110 including the first torque gear 121 may be connected to the second torque gear 122 of the single torque generator 120 to transfer rotational force. Here, the wave actuators 110 may be disposed in different directions. This will be described with reference to FIGS. 9 to 13.

FIGS. 9 to 13 are plan views schematically illustrating a variety of embodiments of the wave actuator.

Referring to FIG. 9, the present invention may have a one-way (1-way) structure in which a single wave actuator 110 and a single torque generator 120 are provided. As illustrated in FIGS. 10 to 13, the wave actuators 110 may be provided in 2-way, 3-way, 4-way, and 6-way structures.

Here, referring to FIG. 10, the 2-way structure includes two wave actuators 110 disposed in opposite positions and a single torque generator 120.

Referring to FIG. 11, the 3-way structure includes three wave actuators 110 and a single torque generator 120.

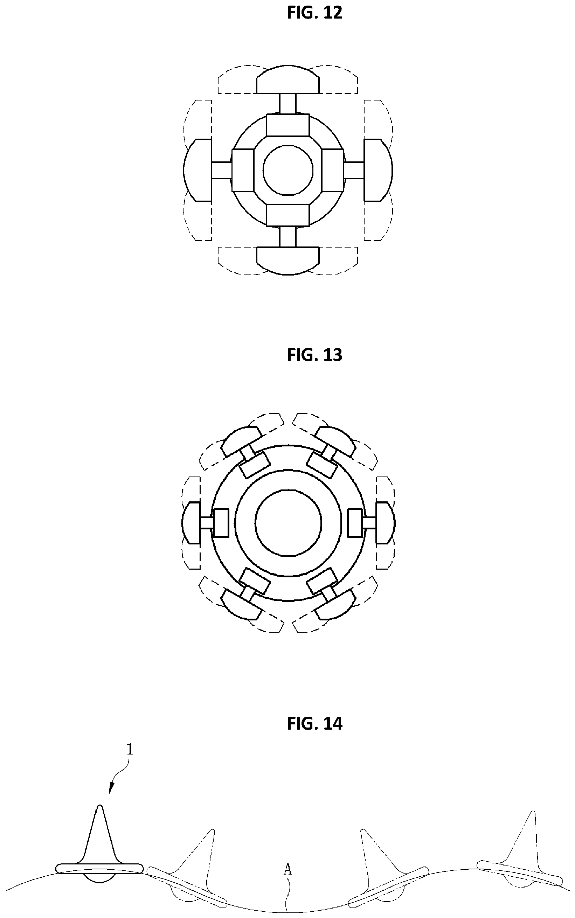

Referring to FIG. 12, the 4-way structure includes four wave actuators 110 and a single torque generator 120.

Referring to FIG. 13, the 6-way structure includes six wave actuators 110 and a single torque generator 120.

That is, since the present invention may provide a plurality of wave actuators 110 for a single torque generator 120, the design may be very easily changed depending on the capacity of power generation as required, and a resultant cost difference is insignificant. In addition, the design is not limited to the 1-way to 6-way structures as described above, and the number of the wave actuator 110 may be further increased as required by the user.

More preferably, the housing 170 may be provided with a plurality of walls extending at different angles of inclination depending on the number of the wave actuators 110, and one or more wave actuators 110 may be disposed on each of the walls.

For example, the 4-way structure may be provided by forming the walls of the housing 170 to be spherical such that the wave actuators 110 are disposed on four wall surfaces in the east, west, south, and north. Alternatively, a plurality of wave actuators may be provided by fabricating the housing 170 to be spherical and disposing the stationary pendulums 116 exposed in different directions.

That is, in the present invention, a plurality of wave actuators 110 may be associated with a single torque generator 120 and may directly react to billow or wave energy applied in any direction, in association with the shape of the housing 170, so as to generate electric power from billow or wave energy.

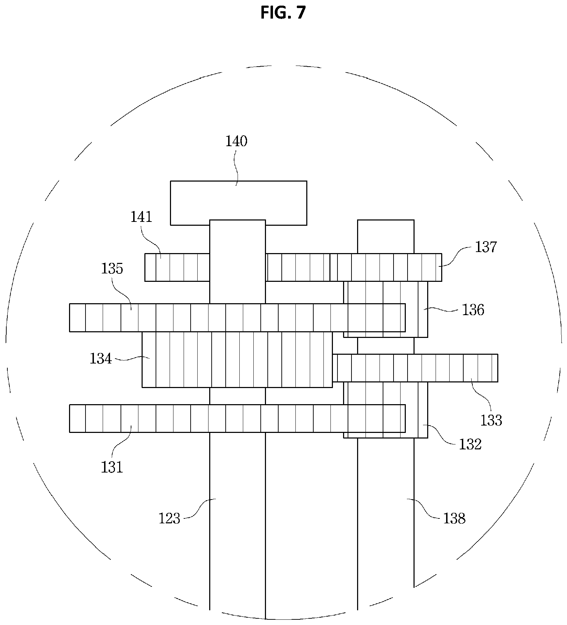

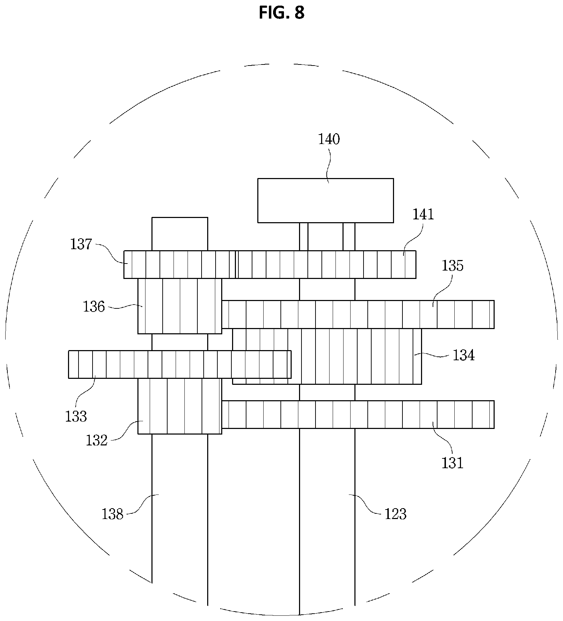

The accelerator 130 accelerates rotational force of the torque generator 120 to actuate the rotor 141 of the generator 140. A more detailed configuration will be described with reference to FIGS. 7 and 8.

FIG. 7 is a front view illustrating the accelerator 130, and FIG. 8 is a rear view of FIG. 7.

Referring to FIGS. 7 and 8, the accelerator 130 includes first to seventh gears 137 and a fixed shaft 138. Here, the first to seventh gears 137 may be divided into a first gear group disposed on the torque shaft 123 and a second gear group disposed on the fixed shaft 138 to have gear ratios different from those of the gears of the first gear group to enable acceleration.

That is, the first gear group includes the first gear 131, the fourth gear 134, and the fifth gear 135 integrally or rotatably fixed to the outer surface of the torque shaft 123, while the second gear group includes the second gear 132, the third gear 133, the sixth gear 136, and the seventh gear 137 rotatably disposed on the outer surface of the fixed shaft 138.

Described in more detail, the first gear 131 is provided integrally with the torque shaft 123 and is connected to the second gear 132 rotatably fixed to the outer surface of the fixed shaft 138. Thus, the first gear 131 rotates the second gear 132 while rotating at same speed as the torque shaft 123.

The second gear 132 is rotatably fixed to the outer surface of the fixed shaft 138 and is rotated by the first gear 131. Here, the second gear 132 has a lower gear ratio than the first gear 131 to accelerate the speed of rotation of the first gear 131.

The third gear 133 is provided on the outer surface of the fixed shaft 138, integrally with the second gear 132, to rotate at the same speed with the second gear 132. That is, the third gear 133 rotates at the speed accelerated by the second gear 132.

The fourth gear 134 is rotatably fixed to the outer surface of the torque shaft 123. The fourth gear 134 may have the same gear ratio as the third gear 133. Thus, the fourth gear 134 rotates at the same speed as the third gear 133.

The fifth gear 135 is provided integrally with the fourth gear 134. Thus, the fifth gear 135 transfers rotational force to the sixth gear 136 while rotating at the same speed as the sixth gear 136.

The sixth gear 136 is rotatably fixed to the outer surface of the fixed shaft 138 and has a lower gear ratio than the fifth gear 135 to be accelerated by rotational force transferred from the fifth gear 135.

The seventh gear 137 is provided integrally with the sixth gear 136 and is connected to the rotor 141 of the generator 140. Thus, the seventh gear 137 rotates at the same speed as the sixth gear 136 to transfer rotational force to the rotor 141 of the generator 140.

That is, the accelerator 130 may sequentially accelerate rotational force initially generated by the torque generator 120 by adjusting the gear ratios between the first gear 131 and the second gear 132 and between the fifth gear 135 and the sixth gear 136.

The rotor 141 of the generator 140 may be rotated by the rotational force accelerated in this manner, thereby increasing the efficiency of power generation using energy.

The present invention includes the above-described components, and the operation of the present invention realized by the above-described components will be described hereinafter.

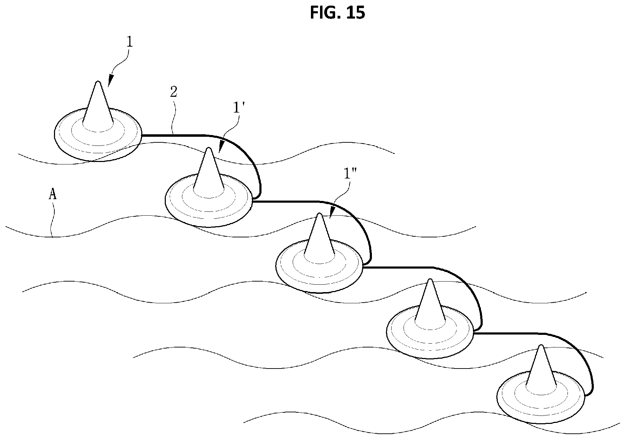

FIGS. 14 and 15 are views illustrating an application of the present invention.

As illustrated in FIG. 14, capsule buoy type wave energy converters according to the present invention are disposed on the water surface. Accordingly, the capsule buoy type wave energy converters are repeatedly leaned to the right and left depending on the height and direction of waves.

Here, according to the present invention, as illustrated in FIG. 15, a plurality of buoys 1, 1', and 1" may be located on the water surface to be connected by a cable or may be located at different heights below the water surface to be connected by a cable.

Batteries 150 disposed in the buoys 1, 1', and 1", respectively, may be connected in parallel or in series to each other to increase the capacity of chargeable electric energy, so that electricity may be supplied to other loads than the LEDs disposed in the buoys 1.

Here, by pendulum movement in response to shaking caused by waves, all of the plurality of wave actuators 110 generates rotational force in the same direction, thereby transferring rotational force to the torque generator 120 in the same direction.

Described in detail, in each of the wave actuators 110, as the stationary pendulum 116 exposed outside of the housing 170 maintains the vertically erected position, the first shaft 111 connected thereto performs the pendulum movement in a direction opposite to one direction. Here, in each of the wave actuators 110, when the first shaft 111 connected to the stationary pendulum 116 rotates in one direction, the second shaft 112 and the fourth shaft 114 are rotated to rotate the first torque gear 121. When the first shaft 111 connected to the stationary pendulum 116 rotates in the opposite direction, the third shaft 113 is rotated to rotate the first torque gear 121.

Thus, as described above, the first torque gear 121 of the torque generator 120 receives the same unidirectional rotational force, irrespective of the direction of the movement of wave energy. In addition, since the second torque gear 122 is rotated by unidirectional rotational force transferred from the plurality of wave actuators 110, the second torque gear 122 may be constantly rotated to actuate the generator 140 until there is no wave.

In addition, the accelerator 130 rotates the rotor 141 of the generator 140 by accelerating rotational force transferred from the torque shaft 123, thereby actuating the generator 140.

That is, since the first gear 131 is provided integrally with the torque shaft 123, the first gear 131 rotates at the same speed as the torque shaft 123. Since the second gear 132 connected to the first gear 131 has a lower gear ratio than the first gear 131, rotational force transferred by the torque shaft 123 is further accelerated.

In addition, since the third gear 133 is provided integrally with the first gear 131, the third gear 133 transfers rotational force having the same speed as the second gear 132 to the fourth gear 134 rotatably fixed to the outer surface of the torque shaft 123.

Here, since the fifth gear 135 is provided integrally with the fourth gear 134, the fifth gear 135 transfers rotational force to the sixth gear 136 while rotating at the same speed as the fourth gear 134. The sixth gear 136 further accelerates the rotational force of the fifth gear 135, and the seventh gear 137 is provided integrally with the sixth gear 136. Consequently, the rotor 141 of the generator 140 is actuated by rotational force accelerated by the seventh gear 137. Consequently, the generator 140 generates electric power.

According to the present invention as described above, the generator is provided in the buoy 1 floating on the water surface, and the plurality of wave actuator 110 rotates the single torque generator 120. Since power generation may constantly performed unless there is no power, power generation efficiency is high. Since the wave energy converter having a small size may be constructed on the water surface or in the water, no engineering work in a large scale is required. In addition, it is very easy to additionally construct or move the wave energy converter.

## Claims

1. A capsule buoy type wave energy converter comprising:
a buoy (1) disposed on the water surface; and
a power generating unit (100) accommodated in the buoy (1) in a sealed manner to generate electricity,
wherein the power generating unit (100) includes:
a generator (140) generating electricity;
at least one wave actuator (110) converting a bidirectional movement caused by wave power into a unidirectional movement;
a torque generator (120) generating rotational force from the unidirectional movement transferred from the wave actuator (110); and
an accelerator (130) accelerating the rotational force of torque generator (120) to actuate the generator (140).

2. The capsule buoy type wave energy converter according to claim 1, wherein the wave actuator (110) includes:
a stationary pendulum (116) made of a heavyweight material and maintaining a vertically erected position;
a first shaft (111) connected to the stationary pendulum (116) to rotate bidirectionally;
a second shaft (112) connected to the first shaft (111) to rotate bidirectionally;
a third shaft (113) rotating in one direction by receiving force when the first shaft (111) rotates in the opposite direction and transferring opposite directional force to the torque generator (120); and
a fourth shaft (114) rotating in one direction by receiving force when the second shaft (112) rotates in the opposite direction and transferring opposite directional force to the torque generator (120).

3. The capsule buoy type wave energy converter according to claim 1, wherein the torque generator (120) includes:
a second torque gear (122) connected the one or more wave actuators (110) to be rotated by unidirectional rotational force transferred from the wave actuators (110); and
a torque shaft (123) vertically erected to be rotate by the unidirectional rotational force transferred by the second torque gear (122).

4. The capsule buoy type wave energy converter according to claim 1, wherein the accelerator (130) sequentially rotates a plurality of gears having different gear ratios to accelerate the rotational force of the torque generator (120).

5. The capsule buoy type wave energy converter according to claim 1, wherein the accelerator (130) includes:
a first gear means including at least one gear disposed on the torque shaft (123) of the torque generator (120);
a fixed shaft (138) erected vertically; and
a second gear means including at least one gear having a gear ratio different from a gear ratio of the first gear means, rotatably disposed on the fixed shaft (138), and accelerating rotational force of the first gear means.

6. The capsule buoy type wave energy converter according to claim 1, further comprising a receptacle unit (300) made of a waterproof material, accommodating the power generating unit (100) therein in a sealed manner, and fixedly disposed within the buoy (1) .

7. The capsule buoy type wave energy converter according to claim 1, further comprising a receptacle unit (300), wherein the receptacle unit (300) includes a first receptacle ball (310) accommodating the power generating unit (100) and a second receptacle ball (320) accommodating the first receptacle ball (310) therein in a sealed manner and fixedly disposed within the buoy (1), and
an outer surface of the first receptacle ball (310) and an inner surface of the second receptacle ball (320) are spaced apart from each other.
